# EUROPEAN PATENT APPLICATION

(11) **EP 1 361 498 A1**
(43) Date of publication of application: **12.11.2003**
(21) Application number: 02354078.4
(22) Date of filing: 06.05.2002
(51) Int. Cl.: G06F 1/18

(54) **Latch and release mechanism for a panel of a computer hardware device**

(71) Applicant: Hewlett-Packard Company, Palo Alto, CA 94304 (US)
(72) Inventor: Rahmouni, Gilbert, 38640 Claix (FR)
(74) Representative: Lloyd, Richard Graham

(57) **Abstract**

A latch and release mechanism for releasably securing a panel to a computer hardware device is described. The mechanism includes a latch member (18) on one of the panel (16) and a body (12, 14) of the computer hardware device and a formation (26) on the other of the panel and the body of the computer hardware device for receipt of the latch member to secure the panel to the body. The mechanism further includes a release member (32) such that pressure applied to a part of the release member disengages the latch member from the formation and releases the panel from the body of the computer hardware device.

## Description

### Field of the Invention

The invention relates to a latch and release mechanism for a panel of a computer hardware device, and in particular although not exclusively to such a mechanism for an access, or front, panel of a personal computer.

### Background of the Invention

Personal computers (PCs) use storage devices, such as floppy disc drives, CDROM drives, DVD drives and hard disk drives, and other modules, which can be upgraded or replaced by the end user. In general these devices are accessible from the front of the PC after removal of a front panel, often referred to as a bezel. The invention relates to the manner in which the front panel is retained on and when required removed from the PC.

PCs generally include a main chassis frame, and a front chassis, secured together, and to which is releasably secured the front panel. The most common method of retaining the front panel in such PCs incorporates a latch and release mechanism as follows. The front panel is moulded from plastic with a pair of integral latch members spaced apart adjacent the top thereof, and a pair of integral spring ribs spaced apart towards the bottom thereof. The latch members each include a hook formation with a ramp surface and an engagement surface. The front surface of the front chassis of the PC has a pair of holes towards the bottom thereof each of which is for receipt of a spring rib. The upper surface of the front chassis has spaced apart a pair of holes for receipt of the latch members.

To install the front panel the spring ribs are located in the respective holes, and the panel is pivoted upwardly and inwardly such that the ramp surfaces of the latch members contact the front edge of the front chassis and are then forced upwardly bending the latch members in the process. Each latch member thus rides up over the front chassis until the hook formation has passed the front edge of the respective hole, the bias of the latch member returns it to it's initial unbent condition and the hook formation falls into the hole. Each engagement surface then engages with the front edge of the respective hole to retain the front panel securely in place. Thus installation of the front panel is a simple process which is also readily achieved by the end user.

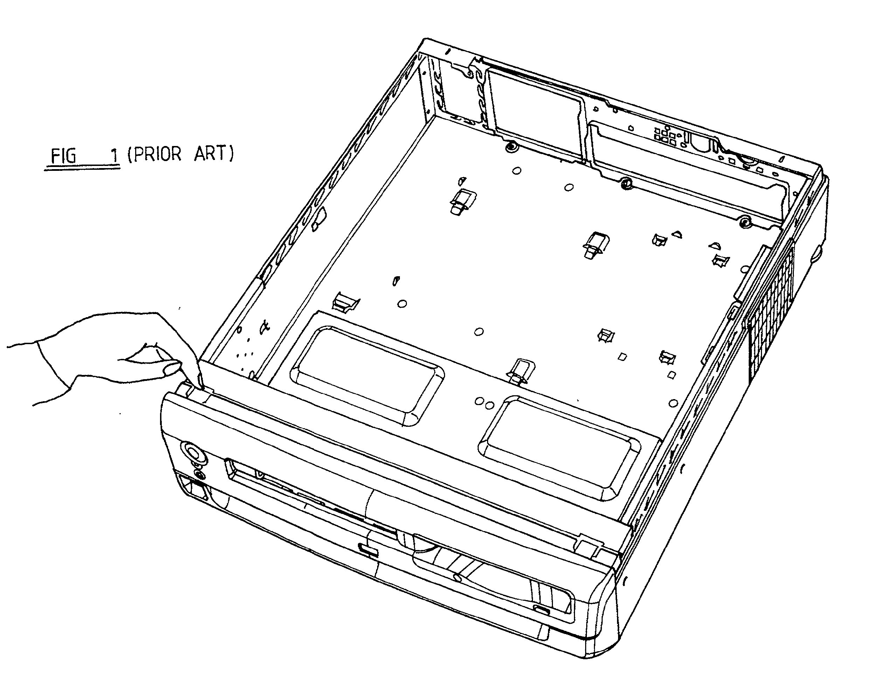

To remove the front panel is also in essence simple, but is however not so readily achieved. First, it is not readily apparent to a user of the PC how to release the front panel, as the latch members are very small and not specifically identified in any way. Second, to remove the panel requires that each latch member is lifted up to remove the hook formation from within the respective hole (see Figure 1), with both being lifted simultaneously, thus permitting the front panel to be pivoted forwardly and downwardly. To lift the latch members using just fingers is very difficult due to the small access area and the stiff plastic from which they are made. However, to lift both simultaneously using tools is also not readily achieved.

An alternative known in the prior art, and particularly appropriate for tower PCs, is described in US Patent No. 5,997,115. In this design the latch and release mechanism is secured to the chassis, rather than the front panel, and has a single point where a user must push down to effect release of the front panel. However, to achieve this easier release the mechanism is remarkably complex and thus will inevitably be costly to implement. It is also unlikely that the design could be adapted for use in standard box rather than tower PCs, due to the greater separation between the latch members in such PCs.

It is an object of the present invention to provide an alternative access latch and release mechanism for a panel which mitigates the above identified problems.

### Summary of the Invention

According to a first aspect of the invention there is provided a latch and release mechanism for releasably securing a panel to a computer hardware device, the mechanism including:
a latch member on one of the panel and a body of the computer hardware device;
a formation on the other of the panel and the body of the computer hardware device for receipt of the latch member to secure the panel to the body,
and characterised in that it further includes:
   a release member such that pressure applied to a first part of the release member causes a second part of the release member to act on the latch member disengaging it from the formation and releasing the panel from the body of the computer hardware device.

The invention provides the advantage that the panel can be removed by application of pressure on a readily accessible part of the release member. Depending on the location of the latch and release mechanism the pressure may be applied downwardly or inwardly, but in any event no lifting of any part is required.

Preferably the latch member is provided on the panel and the formation for receipt of the latch member is provided on the body of the computer hardware device.

The formation for receipt of the latch member conveniently comprises a hole, and the latch member comprises a hook formation which engages in the hole.

Preferably the first part of the release member is a bearing surface at or adjacent a first end and the second part of the release member is a contact surface at or adjacent the other end located below the hook formation of the latch member, the release member being pivotally mounted such that pressure applied to the bearing surface pivots the release member and the contact surface pushes the hook formation out of the hole.

The structure of the body of the computer hardware device may be such that the body of the computer hardware device comprises a first part in which the hole for receipt of the latch member is provided and a second part underlying the first part at the location of the hole for receipt of the latch member, and the release member is located between the first and second parts with the bearing surface being visible through a second hole in the first part.

Preferably the release member includes a pivot element which locates in a recess in the second part of the body.

Preferably the bearing surface and contact surface are on the upper side of the release member and the pivot element is on the lower side of the release member at a mid point thereof.

The structure of the body of the computer hardware device may be such that the first part of the body is a front chassis and the second part of the body is a chassis frame.

Preferably the release member is formed of plastics material of a contrasting colour to the body of the computer hardware device and/or the panel.

The latch and release mechanism may further include a location member on the panel and a second formation on the body of the computer hardware device for receipt of the location member.

The panel may conveniently be formed of plastics material with the latch members integrally moulded and the body of the computer hardware device is formed of metal.

According to a second aspect of the invention there is provided a computer hardware device having a panel and a body and including one or more latch and release mechanisms according to the first aspect of the invention for releasably securing the panel to the body.

### Brief Description of the Drawings

An example of the present invention will now be described, by way of example only, with reference to the accompanying drawings in which:
Figure 1 is a perspective view of a prior art latch and release mechanism as applied to a standard box form of PC;
Figure 2 is a perspective view of a latch and release mechanism of the present invention also as applied to a standard box form of PC;
Figure 3 is a close up of the relevant portion of the PC illustrated in Figure 2, showing the latch and release mechanism more clearly;
Figure 4 is an exploded view of the relevant portion of the PC of Figures 2 and 3;
Figure 5 is a vertical cross sectional view through the latch and release mechanism according to the present invention, parallel to the front of the PC of Figures 2 to 4;
Figure 6 is a vertical cross sectional view through the latch and release mechanism of the present invention, perpendicular to the front of the PC of Figures 2 to 5;
Figure 7 is a perspective view of the inside of the front panel of the PC of Figures 2 to 6 showing clearly the parts of the latch and release mechanism, and
Figure 8 is a perspective view of a release member of the latch and release mechanism of the invention.

### Detailed Description of the Preferred Embodiments

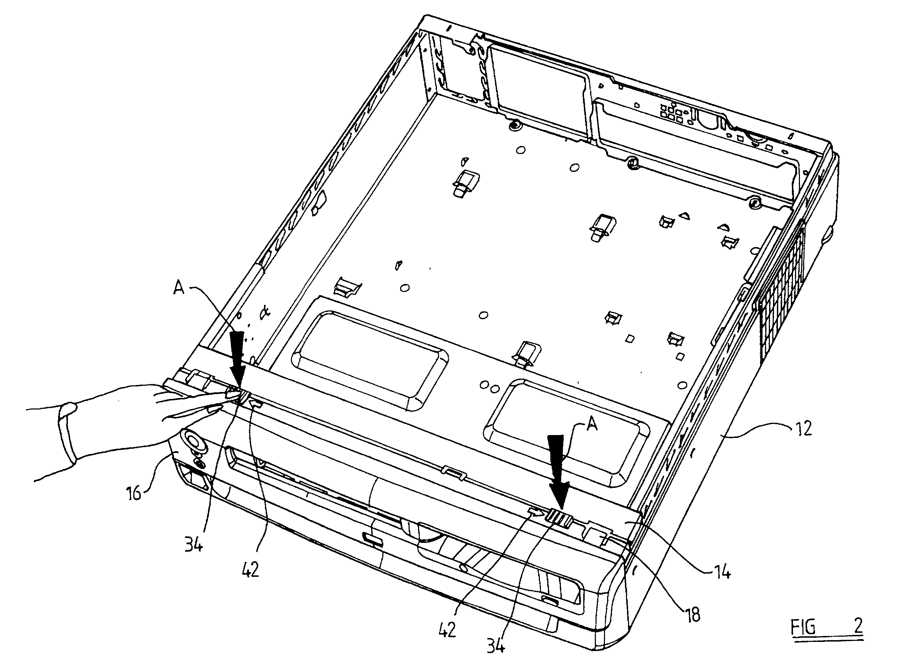

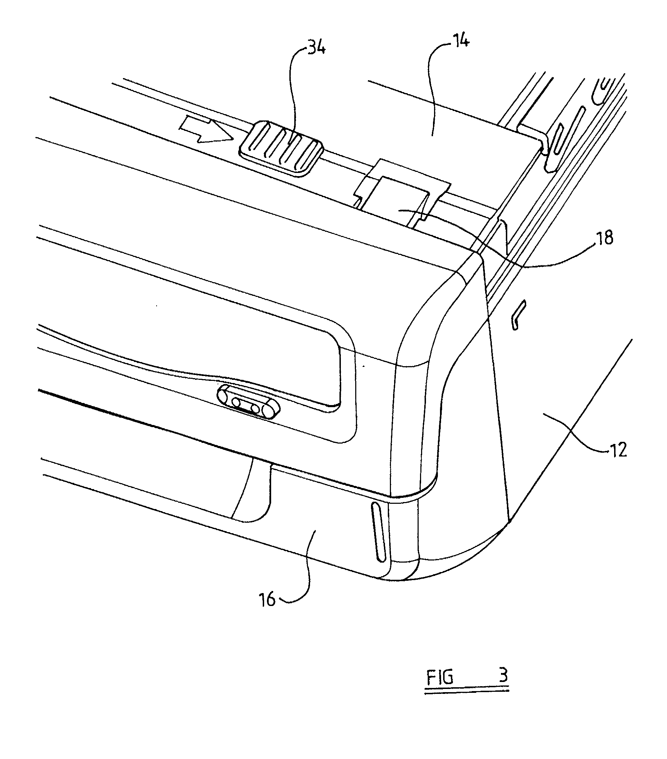

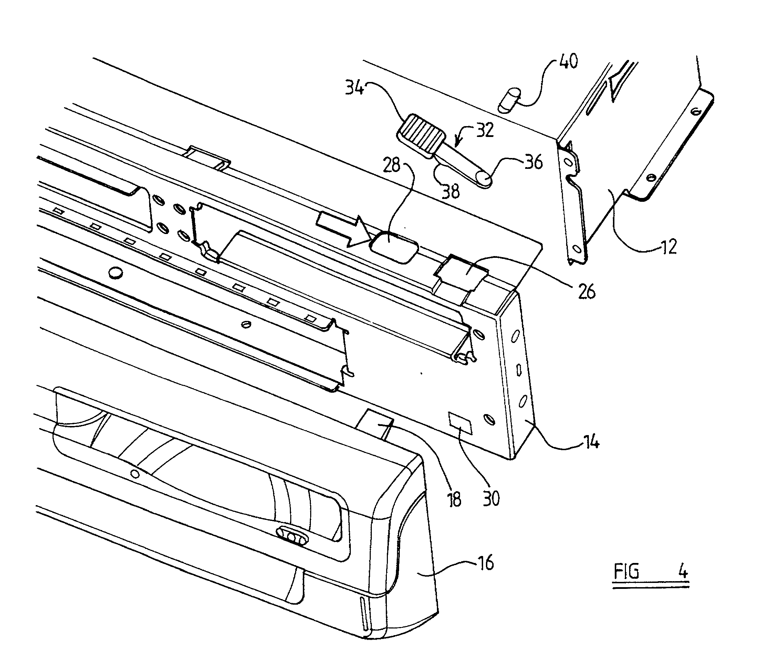

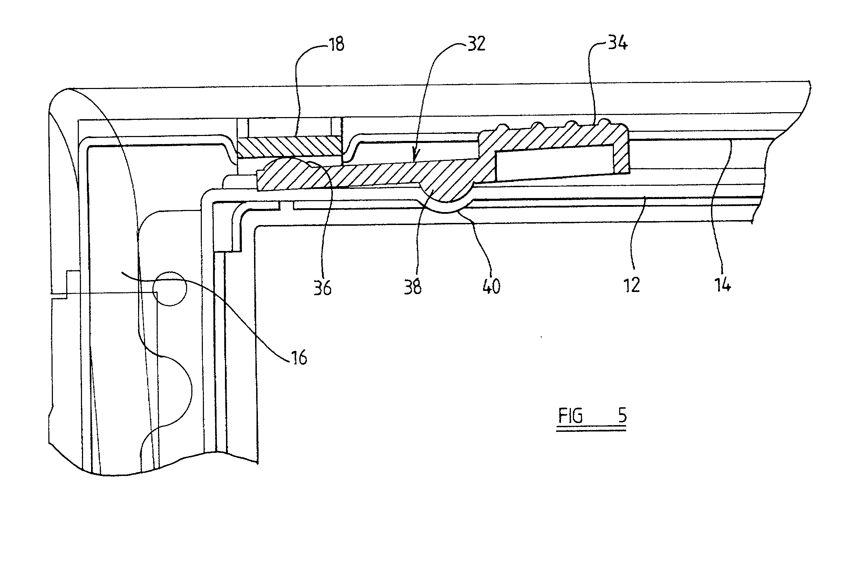

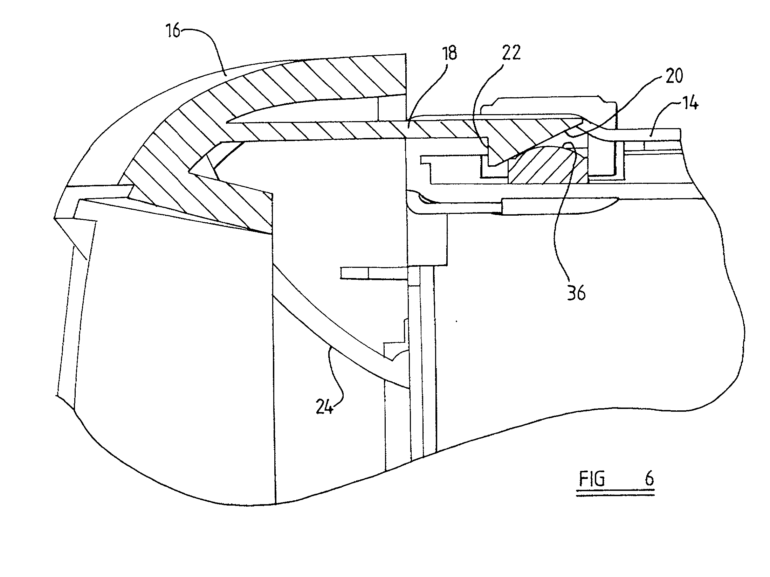

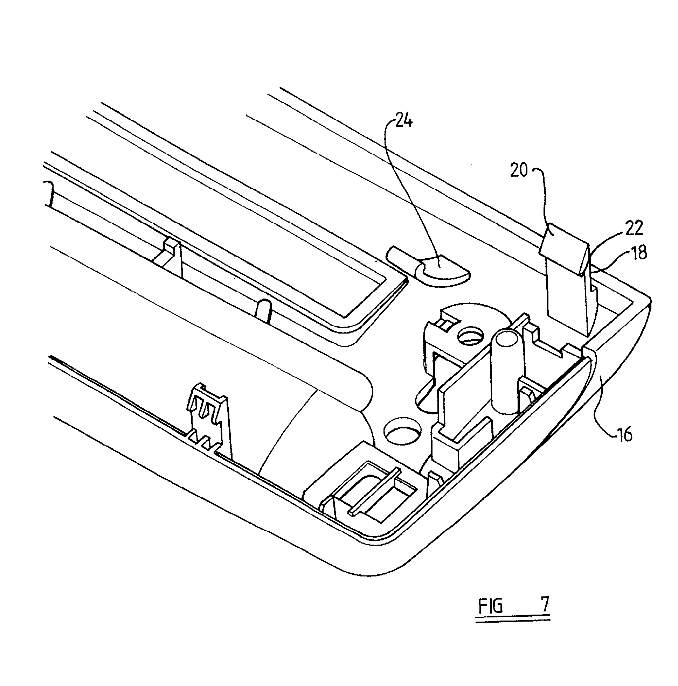

Referring to Figures 2 to 8 a latch and release mechanism according to the invention as applied to a standard box form of PC 10 will be described.

The PC 10 comprises a chassis frame 12 and a front chassis 14 secured together by threaded fasteners to form a chassis, and a front panel 16 releasably secured to the front panel 14 by means of a pair of latch and release mechanisms of the invention.

The front panel 16 comprises an upper part 16a and a lower part 16b. The upper part 16a includes a pair of spaced apart first latch members 18 each having at it's distal end a hook formation providing a ramp surface 20 and an engagement surface 22, and a pair of spaced apart location members in the form of spring ribs 24. The lower part 16b of the front panel 16 includes a pair of spaced apart location members in the form of second latch members 25, each having a downwardly oriented hook formation at its distal end. Conveniently first and second parts 16a, 16b of the front panel 16 are moulded from plastics material and the latch members 18, 25 and spring ribs 24 are provided as integral parts of the mouldings.

The front chassis 14 includes a first pair of spaced apart holes 26 on it's upper surface adjacent the front thereof, and towards the outer edges thereof. The front chassis 14 also includes a second pair of spaced apart holes 28 on it's upper surface and located inwardly of each of the first holes 26. Finally, in respect of the latch and release mechanisms, the front chassis 14 also includes a third pair of spaced part holes 30 on it's front surface, towards the bottom thereof, and conveniently located substantially beneath the first pair of holes 26.

The front panel 16 is secured to the front chassis 14 by locating the second latch members 25 in the third pair of holes 30, and then pivoting the front panel 16 upwardly and inwardly such that the first latch members 18 contact the front edge of the upper surface of the front chassis 14 causing the ramp surfaces 20 to ride up and over the upper surface of the front chassis 14, thus bending the first latch members 18, until the hook formation drops into the first holes 26 allowing the first latch members 18 to return to their original straight condition. The engagement surfaces 22 then engage on the front edge of the holes 26 preventing the front panel 16 from being removed from the front chassis 14. When the front panel 16 is secured to the front chassis 14 the spring ribs 24 are in contact with the front chassis 14 and create a slight pressure pushing the two components apart. This prevents the front panel 16 from rattling and aids in removal of the front panel 16 as described later. This is substantially as for the prior art of Figure 1.

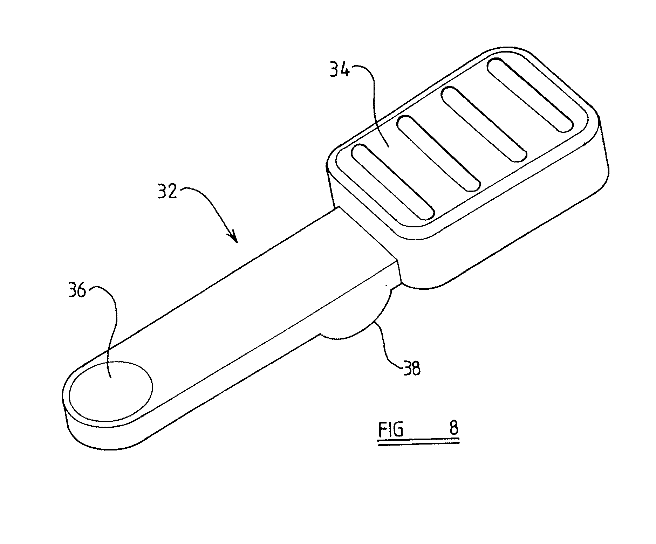

Each latch and release mechanism further includes a release member 32 best illustrated in Figure 8. The release member 32 includes at a first end and on it's upper surface a bearing surface 34 which is preferably textured, e.g. ribbed, to prevent a users finger slipping when bearing down on it. At the other end, and also on it's upper surface is a contact surface 36, which is conveniently of domed form. In a mid portion of the release member 32, and on it's lower surface, is a pivot element 38 conveniently in the form of a rounded rib running across the release member 32.

Finally, as far as each latch and release mechanism is concerned, it includes a pair of recesses 40 on the upper surface of the chassis frame 12 adjacent the front thereof, and each located in between the respective first and second holes 26, 28 in the front chassis 14.

Each release member 32 is located between the upper surface of the front chassis 14 and the upper surface of the chassis frame 12, with the pivot element 38 located in the recess 40. Each bearing surface 34 is located in the respective second hole 28 and the contact surface 36 is located beneath the ramp surface 20 of the respective catch member 18 in first hole 26.

To release the front panel 16 from the chassis of the PC 10, the user simply pushes down on each of the bearing surfaces 34, as illustrated by arrows A in Figure 2. Doing so causes the release members 32 to pivot about the pivot elements 38 such that the first end of each moves downwards towards the chassis frame 12 and the other end of each moves upwards away from the chassis frame 12. Thus the contact surfaces 36 bear up on the ramp surfaces 20 of the first latch members 18 bending the first latch members 18 and lifting the hook formations upwards and out of the first holes 26. The engagement surfaces 22 are thus no longer engaged on the front edges of the holes 26 and the front panel 16 can be pivoted forwardly and downwardly, aided by spring ribs 24, until the hook formations are clear of the front chassis 16 and the first latch members 18 can return to their original straight condition. The second latch members 25 may then be removed from the third holes 30 to remove the front panel 16 from the chassis of the PC.

Thus the latch and release mechanism according to the invention provides a very simple and user friendly operation for the removal of the front panel of a PC. Furthermore the mechanism is very simple to manufacture, requiring very little modification of the prior art, and thus being cost effective to implement. In particular the front panel 16 requires no modification whatsoever, whilst all that is required in the front chassis 14 and chassis frame 12 are a pair of additional holes 28 and a pair of recesses 40 respectively. As the front chassis 14 and chassis frame 12 are generally made of steel which is formed by pressing from sheet these minor features are readily added. The only extra components required for the latch and release mechanisms are the release members 32, which are very simple plastic moulded parts, and are an identical pair not requiring to be handed. In addition, the assembly of the PC with the latch and release mechanisms is also very simple and does not require any additional fastenings.

Preferably the release members 32 are moulded from plastics material of a contrasting colour to that of the other components of the PC against which it is seen in use, in particular the front chassis 14. This makes it easier for the user to identify the manner of removal of the front panel 16, and in particular the relevant locations at which to apply pressure to effect that removal.

Additional assistance for the user may be provided by pressing small arrow shapes 42 into the upper surface of the front chassis 14 adjacent to and pointing towards the second holes 28, in order to draw attention to the bearing surfaces 34 of the release members 32 visible through those holes. Such arrows can readily be included in the pressing operations to form the front chassis 14.

Although the invention has been described as applied to the front panel of a PC it is clearly also applicable to other computer hardware devices where the end user might require access such as for example a printer, or indeed to other kinds of electronic equipment.

In alternative applications latch and release mechanisms according to the invention may be provided in different positions with respect to the computer hardware device. For examples, one or two may be located on each side of a computer, rather than a pair on the top. There may also be applications where a single latch and release mechanism according to the invention could be employed.

A further alternative would be the provision of the latch members on the chassis, or other body of the computer hardware device, and the provision of the holes or other engagement formations on the panel.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A latch and release mechanism for releasably securing a panel to a computer hardware device, the mechanism including:
a latch member on one of the panel and a body of the computer hardware device;
a formation on the other of the panel and the body of the computer hardware device for receipt of the latch member to secure the panel to the body,
and **characterised in that** it further includes:
a release member such that pressure applied to a first part of the release member causes a second part of the release member to act on the latch member disengaging it from the formation and releasing the panel from the body of the computer hardware device.

2. A latch and release mechanism according to claim 1 **characterised in that** the latch member is provided on the panel and the formation for receipt of the latch member is provided on the body of the computer hardware device.

3. A latch and release mechanism according to claim 2 **characterised in that** the formation for receipt of the latch member comprises a hole, and the latch member comprises a hook formation which engages in the hole.

4. A latch and release mechanism according to claim 3 **characterised in that** the first part of the release member is a bearing surface at or adjacent a first end and the second part of the release member is a contact surface at or adjacent the other end located below the hook formation of the latch member, the release member being pivotally mounted such that pressure applied to the bearing surface pivots the release member and the contact surface pushes the hook formation out of the hole.

5. A latch and release mechanism according to claim 4 **characterised in that** the body of the computer hardware device comprises a first part in which the hole for receipt of the latch member is provided and a second part underlying the first part at the location of the hole for receipt of the latch member, and the release member is located between the first and second parts with the bearing surface being visible through a second hole in the first part.

6. A latch and release mechanism according to claim 5 **characterised in that** the release member includes a pivot element which locates in a recess in the second part of the body.

7. A latch and release mechanism according to claim 6 **characterised in that** the bearing surface and contact surface are on the upper side of the release member and the pivot element is on the lower side of the release member at a mid point thereof.

8. A latch and release mechanism according to any one of claims 5 to 7 **characterised in that** the first part of the body is a front chassis and the second part of the body is a chassis frame.

9. A latch and release mechanism according to any one of the preceding claims **characterised in that** the release member is formed of plastics material of a contrasting colour to the body of the computer hardware device and/or the panel.

10. A latch and release mechanism according to any one of claims 2 to 9 **characterised in that** it further includes a location member on the panel and a second formation on the body of the computer hardware device for receipt of the location member.

11. A latch and release mechanism according to any one of the preceding claims **characterised in that** the panel is formed of plastics material with the latch members integrally moulded and the body of the computer hardware device is formed of metal.

12. A computer hardware device having a panel and a body and including one or more latch and release mechanisms according to any one of claims 1 to 11 for releasably securing the panel to the body.
